# EUROPEAN PATENT APPLICATION

(11) **EP 1 008 324 A1**
(43) Date of publication of application: **14.06.2000**
(21) Application number: 99123010.3
(22) Date of filing: 19.11.1999
(51) Int. Cl.: A47L 15/46

(54) **Process for the cleaning of dishes in a dishwashing machine**

(30) Priority: 12.12.1998 DE 19857413
(71) Applicant: WHIRLPOOL CORPORATION, Benton Harbor Michigan 49022 (US)
(72) Inventor: Loch, Christian, c/o Whirlpool Europe S.r.l., 21025 Comerio (IT); Mueller, Karl-Heinz, c/o Whirlpool Europe S.r.l., 21025 Comerio (IT)
(74) Representative: Guerci, Alessandro

(57) **Abstract**

The invention relates to a process for the cleaning of dishes in a dishwashing machine having a liquid circulation cycle with a circulating pump, which in successive, preferably program-controlled sequences draws liquid introduced into the washing compartment from the washing compartment sump and sprays it onto the dishes inserted in crockery baskets by way of spray devices arranged in the washing compartment, the liquid flowing back to the sump of the washing compartment again. The liquid and energy required in running the program are significantly reduced in that in at least some of the sequences (pre-rinse, intermediate rinse and clear rinse, glass and quick-wash) only a reduced quantity of liquid is introduced into the washing compartment, which is not sufficient for a stable hydraulic continuous operation of the liquid circulation cycle (intake of air), and that the liquid circulation cycle is monitored for the occurrence of an unstable hydraulic condition, and the circulation pump switched off or its pump delivery reduced for a period of time as a function thereof.

## Description

The invention relates to a process for the cleaning of dishes in a dishwashing machine having a liquid circulation cycle with a circulating pump, which in successive, preferably program-controlled sequences draws liquid introduced into the washing compartment from the washing compartment sump and sprays it onto the dishes inserted in crockery baskets by way of spray devices arranged in the washing compartment, the liquid flowing back to the sump of the washing compartment again.

The trend in the further development of dishwashing machines is increasingly towards reduction of the quantity of liquid required for cleaning dishes.

As DE 24 28 991 B2 shows, the liquid consumption and the energy consumption of a dishwashing machine can also be reduced in that the spray devices designed as spray arms are, at least during one sequence, connected to the circulating pump in an alternating cycle. Since only one spray arm, that is half the spray system, is in operation at any time, there is no risk, even with a low level of liquid in the washing compartment, that the circulating pump will draw in air, resulting in a fall in the spray jet pressure. The reduction in the quantity of liquid is limited, even in this dishwashing machine, since even half the washing system has to function in a stable hydraulic condition. Furthermore an additional reversing element is needed for the alternating connection of the spray chamber to the circulating pump.

The object of the invention is to improve a process of the type initially described, so that in certain sequences the required quantity of liquid can be reduced still further without having to provide a reversing element for the spray device.

This object is achieved according to the invention in that, in at least some of the sequences (pre-rinse, intermediate rinse and clear rinse, glass and quick-wash), only a reduced quantity of liquid is introduced into the washing compartment, which is not sufficient for a stable hydraulic continuous operation of the liquid circulation cycle (intake of air), and that the liquid circulation cycle is monitored for the occurrence of an unstable hydraulic condition, and the circulation pump switched off or its pump delivery reduced for a period of time as a function thereof.

In this embodiment of the process account is deliberately taken of the occurrence of an unstable hydraulic condition in the liquid circulation cycle. The occurrence of this condition is easy to monitor and is used to switch off the circulating pump or to reduce the pump delivery of the circulating pump. To do this, an additional sensor or a time control adjusted to the hydraulic system is required.

This "dynamic" rinsing is preferably performed in the pre-rinse, intermediate rinse and clear rinse and in the glass and quick-wash sequences, whilst in the main washing sequence a continuous rinse may be preferred, or a continuous rinse or dynamic rinsing may be selected according to how dirty the dishes are.

The operation of the liquid circulation cycle below the hydraulic stability limit brings a further reduction of the liquid consumption. At the same time, savings can be made in the quantity of detergent and rinse aid whilst maintaining the same concentration.

In sequences with heating, there are also savings in the energy required for heating up the reduced quantity of liquid.

Introducing the reduced quantity of liquid into the washing compartment takes less time. In addition to the heat-up time the liquid inlet time is consequently also reduced, which can be utilised in order to reduce the program running time.

With a small additional consumption of liquid = fresh water, an additional rinsing sequence can be introduced, by means of which the amount of water mixed with detergent which is drawn in can be reduced.

If the pump delivery is reduced or the circulating pump is switched off, this also prevents air being drawn in via the circulating pump, which together with foaming agents in the wash liquid can form foam that might adversely affect the functioning of the dishwashing machine. In the phase sufficient liquid can continue to flow from the inner compartment of the dishwashing machine to the intake connection of the circulating pump. If the quantity of liquid therein is sufficient, the pump delivery is again increased or the circulating pump is switched on, and a new hydraulically stable circulation cycle commences. This new circulation cycle is continued until an unstable hydraulic condition is detected in the liquid circulation cycle.

In one embodiment of the process according to the invention the period of time for shut-off of the circulating pump or reduction of the pump delivery can be predetermined.

If, on the other hand, provision is made for monitoring of the water level in the sump of the washing compartment by means of a water level sensor or at the intake connection of the circulating pump, and for ending of the period when the water level sensor indicates a prevailing quantity or level of liquid, the new circulation cycle can automatically re-commence at the correct time. The quantity of liquid collected in the sump of the washing compartment or in the intake connection of the circulating pump is then sufficient for a new stable, hydraulic operation of the liquid circulation cycle.

The transition from the stable to the unstable hydraulic condition of the liquid circulation cycle can also be detected in that the occurrence of the unstable hydraulic condition is monitored by means of a pressure sensor, which registers the pressure built up by the circulating pump in the liquid circulation cycle, or in that the occurrence of the unstable hydraulic condition is registered by measuring the current or the phase displacement between voltage and the current of the motor of the circulating pump.

According to a further embodiment, provision can also be made for monitoring the occurrence of the unstable hydraulic condition by means of a foam sensor.

This prevents the formation of foam that would occur due to the admixture of air with foaming agents in the liquid, such as detergent, rinse aid etc. Even if air is briefly drawn in during the transition from the stable to the unstable hydraulic condition in the liquid circulation cycle, this is not sufficient for any significant foam formation, owing to the brief transition time lasting a few seconds.

If a turbidity sensor is provided in the washing compartment, either continuous rinsing or dynamic rinsing can be selected as a function of the contamination of the liquid. It is moreover possible, through manual pre-selection, to pre-set continuous rinsing or dynamic rinsing in certain sequences of the program according to how dirty the dishes are. If the dishwashing machine is provided with a microprocessor, the process according to the invention can, as a software function, be pre-set with dynamic rinsing and/or continuous rinsing for individual sequences of the program.

## Claims

1. Process for the cleaning of dishes in a dishwashing machine having a liquid circulation cycle with a circulating pump, which in successive, preferably program-controlled sequences draws liquid introduced into the washing compartment from the washing compartment sump and sprays it onto the dishes inserted in crockery baskets by way of spray devices arranged in the washing compartment, the liquid flowing back to the sump of the washing compartment again,
characterised in that
in at least some of the sequences (pre-rinse, intermediate rinse and clear rinse, glass and quick-wash) only a reduced quantity of liquid is introduced into the washing compartment, which is not sufficient for a stable hydraulic continuous operation of the liquid circulation cycle (intake of air by the circulating pump), and
that the liquid circulation cycle is monitored for the occurrence of an unstable, hydraulic condition, and the circulation pump switched off or its pump delivery reduced for a period of time as a function thereof.

2. Process according to claim 1,
characterised in that
the period for the shut-off of the circulating pump or for the reduction of the pump delivery is predetermined.

3. Process according to claim 1,
characterised in that
the water level in the sump of the washing compartment is monitored by means of a water level sensor or at the intake connection of the circulating pump and
that the period is terminated when the water level sensor indicates a prevailing quantity or level of liquid.

4. Process according to one of claims 1 to 3,
characterised in that
the occurrence of the unstable hydraulic condition is monitored by means of a pressure sensor, which registers the pressure built up in the liquid circulation cycle by the circulating pump.

5. Process according to one of claims 1 to 3,
characterised in that
the occurrence of the unstable hydraulic condition is registered by measuring the current or the phase displacement between the voltage and the current of the motor of the circulating pump.

6. Process according to one of claims 1 to 3,
characterised in that
the occurrence of the unstable hydraulic condition is monitored by means of a foam sensor.
